# EUROPÄISCHE PATENTANMELDUNG

(11) **EP 2 113 693 A1**
(43) Veröffentlichungstag der Anmeldung: **04.11.2009**
(21) Anmeldenummer: 09005743.1
(22) Anmeldetag: 24.04.2009
(51) Int. Cl.: F16K 1/38

(54) **Ventil**

(30) Priorität: 29.04.2008 DE 202008005909 U
(71) Anmelder: Zehnder Verkaufs- und Verwaltungs AG, 5722 Gränichen (CH)
(72) Erfinder: Veldhuijzen, Arie, 8281 ME Genemuiden (NL)
(74) Vertreter: Stenger, Watzke & Ring

(57) **Zusammenfassung**

Ventil (10) geeignet für das Steuern einer Gasströmung, insbesondere einer Luftströmung, mit einem bewegbar gelagerten Ventilkörper (12) sowie einem Ventilsitz (14), wobei der Ventilsitz (14) einen im Wesentlichen konisch ausgebildeten Abschnitt (16), der zur Kontaktierung des Ventilkörpers (12) in einer Schließstellung des Ventilkörpers (12) vorgesehen ist, und der Ventilkörper einen im Wesentlichen kegel- oder kegelstumpfförmig ausgebildeten Abschnitt (18) zur Kontaktierung des Ventilsitzes (14) in der Schließstellung des Ventilkörpers (12) aufweist.

## Beschreibung

Die vorliegende Erfindung betrifft ein Ventil für das Steuern einer Gasströmung sowie einen Ventilkörper für das Ventil und einen Ventilsitz.

Gattungsgemäße Ventile werden vielfach in Industrie- und Haushaltsbereichen eingesetzt, um Gase, insbesondere technische Gase, Luft oder dergleichen anforderungsgemäß steuern zu können. Ein besonderes Augenmerk ist hierbei auf die Klimatisierung von Gebäuden zu legen, wobei Raumluft zum Zwecke der Klimatisierung kontinuierlich oder zu diskreten Zeitpunkten ausgetauscht wird. Hierzu sind entsprechende Lüftungskanäle vorgesehen, über die eine entsprechende Klimatisierung vorgenommen werden kann. Um die Luftströmung innerhalb der Kanäle und damit auch den Luftaustausch innerhalb des zu klimatisierenden Raumes steuern zu können, sind Ventile vorgesehen. An den Ventilen entstehen jedoch häufig turbulente Strömungen, die darüber hinaus Geräusche nach sich ziehen, die in der Regel als störend empfunden werden. Die Geräusche können von der Ventilstellung abhängig sein, so dass sie nur unter bestimmten Belüftungsbedingungen auftreten.

Der Erfindung liegt somit die **Aufgabe** zugrunde, ein gattungsgemäßes Ventil dahingehend weiterzubilden, dass die Geräuschbildung reduziert werden kann.

Als **Lösung** wird mit der Erfindung ein Ventil geeignet für das Steuern einer Gasströmung, insbesondere einer Luftströmung, mit einem bewegbar gelagerten Ventilkörper sowie einem Ventilsitz vorgeschlagen, wobei der Ventilsitz einen im Wesentlichen konisch ausgebildeten Abschnitt, der zur Kontaktierung des Ventilkörpers in einer Schließstellung des Ventilkörpers vorgesehen ist, und der Ventilkörper einen im Wesentlichen kegel- oder kegelstumpfförmig ausgebildeten Abschnitt zur Kontaktierung des Ventilsitzes in der Schließstellung des Ventilkörpers aufweist.

Die Ausgestaltung des Ventilkörpers und des Ventilsitzes erlaubt es, eine geräuschreduzierte Strömung zu erreichen. Der Vorteil wird nicht nur in einer oder mehreren diskreten Relativstellungen von Ventilkörper zu Ventilsitz zueinander erreicht, sondern er kann über einen gesamten Stellbereich des Ventilkörpers realisiert werden. Die Erfindung ermöglicht es somit, nicht nur die Geräuschbildung zu reduzieren, sondern darüber hinaus auch Strömungsverluste zu vermindern. Der Ventilkörper kann beispielsweise längsverschieblich gelagert sein, so dass sein kegel- oder kegelstumpfförmiger Abschnitt den konisch ausgebildeten Abschnitt des Ventilsitzes kontaktieren kann. Je nach Ausgestaltung kann vorgesehen sein, dass sowohl der konisch ausgebildete Abschnitt des Ventilsitzes als auch der kegel- oder kegelstumpfförmig ausgebildete Abschnitt des Ventilkörpers eine gleiche Neigung aufweisen, so dass im geschlossenen Zustand des Ventils eine Dichtfläche gebildet wird. Vorzugsweise sind die Abschnitte in Umfangsrichtung kreisförmig ausgebildet, bilden somit Rotationskörper, so dass eine Ventilfunktion unabhängig von einer Drehstellung des Ventilkörpers zum Ventilsitz erreicht werden kann. Diese Ausgestaltung erlaubt es darüber hinaus, den Ventilkörper beispielsweise mit einem Gewindeantrieb zu versehen, um ihn in die vorgegebene Stellung verfahren zu können.

Daneben kann natürlich auch vorgesehen sein, dass der Ventilsitz und/oder der Ventilkörper von der Kreisform abweichende Umfangsformen aufweisen, beispielsweise pyramidenförmig, elliptisch oder dergleichen. Natürlich kann auch im konisch ausgebildeten Abschnitt des Ventilsitzes und/oder im kegel- oder kegelstumpfförmig ausgebildeten Abschnitt des Ventilkörpers eine variierende Schrägstellung vorgesehen sein, um beispielsweise strömungsdynamisch günstige Zwischenstellungen für das Ventil erreichen zu können. Darüber hinaus können zusätzliche Dichtelemente wie Dichtringe, Dichtlippen oder dergleichen am Ventilsitz oder am Ventilkörper angeordnet sein, um in der geschlossenen Stellung des Ventils eine gasdichte Abdichtung zu verbessern.

Um den Ventilkörper in bestimmungsgemäßer Weise verfahren zu können, damit das Ventil in die gewünschte Stellung verfahren werden kann, wird vorgeschlagen, dass der Ventilkörper eine Ventilschiene aufweist, die mit einer Führung zusammenwirkt.

Vorzugsweise sind wenigstens drei Führungen mit korrespondierenden Ventilschienen vorgesehen, so dass eine stabile Führung des Ventilkörpers innerhalb des Ventils während des Verfahrens erreicht werden kann. So kann mittels der Führung eine sichere, präzise Verschieblichkeit des Ventilkörpers entlang einer vorgegebenen Bahn, beispielweise in Längsrichtung des Ventilkörpers, erreicht werden. Eine hohe Genauigkeit der Führung des Ventilkörpers kann erreicht werden, wobei zugleich die Gefahr eines Verhakens aufgrund von durch Toleranzen ermöglichten Schrägstellungen reduziert werden kann. Die Betriebssicherheit des Ventils kann verbessert werden.

Vorzugsweise ist die Ventilschiene mit dem Ventilkörper verbunden. Die Verbindung kann beispielsweise durch eine Lagerung in Längsrichtung, das heißt, in Verschieberichtung, gebildet sein, die beispielsweise als Gleitlager oder dergleichen ausgebildet sein kann. Letzteres ermöglicht eine einfache, zuverlässige Lagerung bei zugleich hoher Zuverlässigkeit und geringem Wartungsaufwand.

Im Bereich der Ventilschiene und/oder der Führung kann ein Antrieb vorgesehen sein, mit dem es ermöglicht wird, den Ventilkörper in die gewünschte Position zu verfahren. Vorzugsweise ist der Antrieb für jede der Ventilschienen vorgesehen, so dass ein gleichmäßiges, verkantungsfreies Verfahren des Ventilkörpers erreicht werden kann. Der Antrieb kann beispielsweise durch einen elektrischen, pneumatischen, hydraulischen Antrieb gebildet sein, der über eine entsprechende Steuereinrichtung steuerbar ist.

Um die Geräuschbildung weiter reduzieren zu können, wird vorgeschlagen, dass der Ventilkörper dem kegel- oder kegelstumpfförmig ausgebildeten Abschnitt gegenüberliegend im Wesentlichen zylindrisch ausgebildet ist. Hierdurch kann eine günstige Strömungsführung im Ventilbereich erreicht werden. Der zylindrische Bereich kann darüber hinaus durch einen strömungsoptimierten Auslaufbereich weiterverbessert werden. Vorzugsweise ist der zylindrische Bereich hinsichtlich seiner Umfangsform an die Umfangsform des kegel- oder kegelstumpfförmig ausgebildeten Abschnitts angepasst ausgebildet.

Weiterhin erweist es sich als vorteilhaft, wenn der Ventilkörper im zylindrisch ausgebildeten Bereich Befestigungsmittel für einen Antrieb aufweist. Dies erlaubt es, dem zylindrisch ausgebildeten Bereich zugleich zur Aufnahme eines Antriebs zu nutzen, mit dem der Ventilkörper gegenüber dem Ventilsitz verstellt werden kann. So lässt sich eine kompakte Bauform des Ventils erreichen. Die Versorgung des Antriebs mit Energie kann beispielsweise über die Ventilschiene oder dergleichen erfolgen. Eine Integration der Versorgung des Antriebs in die Ventilschiene erlaubt es zugleich, die Versorgungsleitungen geschützt anzuordnen, so dass eine hohe Zuverlässigkeit erreicht werden kann, wobei die Gasströmung beeinflussende Effekte vermieden werden können.

Besonders vorteilhaft ist ein Abstand zwischen dem Ventilkörper und dem Ventilsitz kontinuierlich einstellbar. Die kontinuierliche Einstellung erlaubt es jedoch, das Ventil für eine Vielzahl von Anwendungen nach Bedarf optimal einstellen zu können. Natürlich können auch diskrete Vorzugspositionen vorgesehen sein, die auf die jeweilige Anlage, in der das Ventil eingebaut ist, abgestimmt sind. Somit ist der Abstand zwischen dem Ventilkörper und dem Ventilsitz in diskret vorgebbaren Positionen einstellbar. Die Positionen umfassen vorzugsweise nicht nur die Endstellungen des Ventilkörpers sondern auch Zwischenstellungen, die sich für den bestimmungsgemäßen Betrieb als besonders vorteilhaft erweisen.

Um die Strömungsdynamik weiter zu verbessern, kann vorgesehen sein, dass der Ventilkörper im zylindrisch ausgebildeten Bereich einen umlaufenden Absatz aufweist. Der umlaufende Absatz ist als umlaufender Rücksprung im zylindrischen Bereich ausgebildet. Er kann einstückig mit dem Ventilkörper ausgebildet sein. Er kann jedoch auch durch ein separates Bauteil gebildet sein, welches mit dem Ventilkörper verbunden werden kann. Dies erlaubt es, den umlaufenden Absatz bedarfsweise einstellen zu können.

In einer Ausgestaltung wird vorgeschlagen, dass eine Neigung des Abschnitts des Ventilsitzes sowie eine Neigung des kegel- oder kegelstumpfförmig ausgebildeten Abschnitts voneinander abweichen. Hierdurch lassen sich die Strömungsverhältnisse günstig beeinflussen, so dass auch in Zwischenstellungen des Ventilkörpers, insbesondere in ausgewählten Vorzugsstellungen eine möglichst geräuscharme Strömungsführung erreicht werden kann.

Mit der Erfindung werden ferner ein Ventilkörper des erfindungsgemäßen Ventils sowie ein Ventilsitz des erfindungsgemäßen Ventils vorgeschlagen. Die besondere Formgebung erlaubt es, Strömungsgeräusche zu reduzieren.

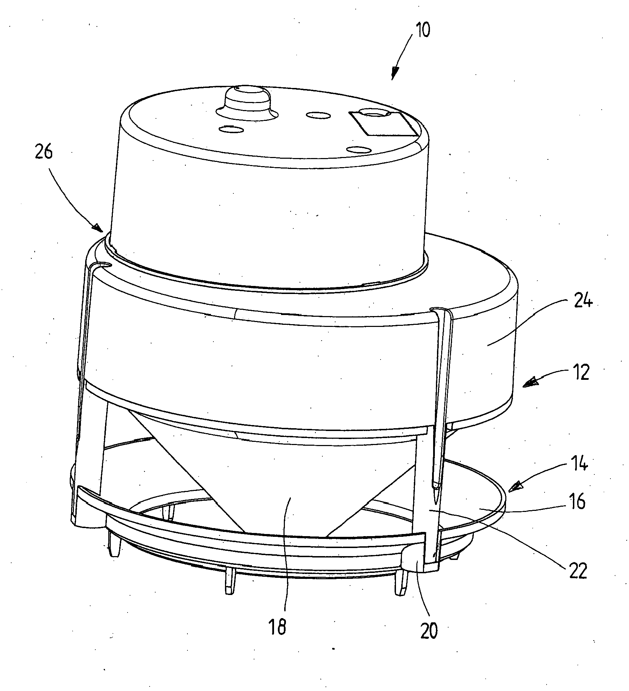

Weitere Vorteile und Merkmale sind der folgenden Beschreibung eines Ausführungsbeispiels zu entnehmen. Die Zeichnung ist eine Schemazeichnung und dient lediglich der Erläuterung des folgenden Ausführungsbeispiels.

Die einzige Figur zeigt ein Ventil gemäß der Erfindung in schematischer, perspektivischer Darstellung.

Aus der einzigen Figur ist ein erfindungsgemäßes Ventil 10 ersichtlich, welches schematisch in perspektivischer Darstellung im geöffneten Zustand dargestellt ist. Das Ventil 10 weist einen Ventilsitz 14 auf, dem gegenüberliegend ein längsverschieblich angeordneter Ventilkörper 12 angeordnet ist. Der Ventilkörper 12 ist in axialer Richtung bewegbar gelagert. Zur bewegbaren Lagerung des Ventilkörpers 12 weist dieser parallel zu einer nicht dargestellten Längsachse des Ventilkörpers 12 drei in Richtung des Ventilsitzes 14 ragende Ventilschienen 22 auf. Diese sind in am Ventilsitz 14 ausgebildeten Führungen 20 längsverschieblich gelagert. Vorliegend sind am Ventilkörper 12 drei Ventilschienen 22 angeordnet, die in drei entsprechenden Führungen 20 des Ventilsitzes 14 geführt sind. Die Lagerung der Ventilschiene 22 in der Führung 20 ist durch eine Gleitlagerung bewirkt.

Aus der Figur ist ferner ersichtlich, dass der Ventilsitz 14 einen im Wesentlichen konisch ausgebildeten Abschnitt 16 aufweist. Der Abschnitt 16 des Ventilkörpers 12 ist in einer Schließstellung des Ventilkörpers 12 zur Kontaktierung des Ventilkörpers 12 vorgesehen. Ferner weist der Ventilkörper 12 einen im Wesentlichen kegelförmig ausgebildeten Abschnitt 18 zur Kontaktierung des Ventilsitzes 14 in der Schließstellung des Ventilkörpers 12 auf. Vorliegend sind die Neigungen des Abschnittes 16 sowie des Abschnittes 18 derart ausgebildet, dass in einer Schließstellung des Ventils 10, in der der Abschnitt 18 des Ventilkörpers 12 auf dem Abschnitt 16 des Ventilsitzes 14 aufliegt, eine nicht bezeichnete Dichtfläche gebildet wird. Die Neigungen sind somit im Wesentlichen gleich ausgebildet.

An den Bereich 18 schließt sich ein zylindrisch ausgebildeter Bereich 24 des Ventilkörpers 12 an. An diesem sind radial außen in Richtung des Ventilsitzes 14 die Ventilschienen 22 in radial äußeren Positionen im Abstand von jeweils etwa 120° angeformt. Sowohl der Ventilsitz 14 als auch der Ventilkörper 12 sind in Schnittebenen in Umfangsrichtung kreisförmig ausgebildet, so dass sie Rotationskörper bilden.

Im zylindrisch ausgebildeten Bereich 24 des Ventilkörpers 12 ist ferner ein umlaufender Absatz 26 vorgesehen.

Weiterhin ist im zylindrischen Bereich 24 ein nicht näher bezeichneter Antrieb für den Ventilkörper 12 angeordnet. Mit diesem kann die Position des Ventilkörpers 12 kontinuierlich zwischen einer geschlossenen Stellung des Ventils 10 und einer vollständig geöffneten Stellung des Ventils 10 kontinuierlich verfahren werden.

Um eine Optimierung hinsichtlich der Geräusche vornehmen zu können, sind in der vorliegenden Ausgestaltung Vorzugspositionen vorgesehen, die in Abstimmung mit einer Anlage festgelegt sind, in die das Ventil 10 eingebaut ist. Die Vorzugspositionen zeichnen sich durch besonders geringe Betriebsgeräusche aus.

Das in der Figur dargestellte Ausführungsbeispiel dient lediglich der Erläuterung der Erfindung und ist für diese nicht beschränkend.

### Bezugszeichenliste

- 10: Ventil
- 12: Ventilkörper
- 14: Ventilsitz
- 16: Abschnitt
- 18: Abschnitt
- 20: Führung
- 22: Ventilschiene
- 24: Bereich
- 26: Absatz

## Patentansprüche

1. Ventil geeignet für das Steuern einer Gasströmung, insbesondere einer Luftströmung, mit einem bewegbar gelagerten Ventilkörper sowie einem Ventilsitz,
**dadurch gekennzeichnet,**
**dass** der Ventilsitz einen im Wesentlichen konisch ausgebildeten Abschnitt, der zur Kontaktierung des Ventilkörpers in einer Schließstellung des Ventilkörpers vorgesehen ist, und der Ventilkörper einen im Wesentlichen kegel- oder kegelstumpfförmig ausgebildeten Abschnitt zur Kontaktierung des Ventilsitzes in der Schließstellung des Ventilkörpers aufweist.

2. Ventil nach Anspruch 1, **dadurch gekennzeichnet, dass** der Ventilkörper eine Ventilschiene aufweist, die mit einer Führung zusammenwirkt.

3. Ventil nach Anspruch 1 oder 2, **dadurch gekennzeichnet, dass** die Ventilschiene mit dem Ventilkörper verbunden ist.

4. Ventil nach einem der Ansprüche 1 bis 3, **dadurch gekennzeichnet, dass** im Bereich der Ventilschiene ein Antrieb vorgesehen ist.

5. Ventil nach einem der Ansprüche 1 bis 3, **dadurch gekennzeichnet, dass** der Ventilkörper dem kegel- oder kegelstumpfförmig ausgebildeten Abschnitt gegenüberliegend im Wesentlichen zylindrisch ausgebildet ist.

6. Ventil nach einem der Ansprüche 1 bis 3, **dadurch gekennzeichnet, dass** der Ventilkörper im zylindrisch ausgebildeten Bereich Befestigungsmittel für einen Antrieb aufweist.

7. Ventil nach einem der Ansprüche 1 bis 3, **dadurch gekennzeichnet, dass** ein Abstand zwischen dem Ventilkörper und dem Ventilsitz kontinuierlich einstellbar ist.

8. Ventil nach einem der Ansprüche 1 bis 3, **dadurch gekennzeichnet, dass** der Abstand zwischen dem Ventilkörper und dem Ventilsitz in diskret vorgebbaren Positionen einstellbar ist.

9. Ventil nach einem der Ansprüche 1 bis 3, **dadurch gekennzeichnet, dass** der Ventilkörper im zylindrisch ausgebildeten Bereich einen umlaufenden Absatz aufweist.

10. Ventil nach einem der Ansprüche 1 bis 3, **dadurch gekennzeichnet, dass** eine Neigung des Ventilsitzes sowie eine Neigung des kegel- oder kegelstumpfförmig ausgebildeten Abschnitts voneinander abweichen.

11. Ventilkörper des Ventils nach einem der vorhergehenden Ansprüche.

12. Ventilsitz des Ventils nach einem der Ansprüche 1 bis 5.
